(19) Europäisches Patentamt
European Patent Office
Office européen des brevets

(11) Numéro de publication : **0 007 063**
**B1**

(12) **FASCICULE DE BREVET EUROPÉEN**

(45) Date de publication du fascicule du brevet : **11.11.81**

(51) Int. Cl.³ : **C 01 B 33/02**// H01L31/18

(21) Numéro de dépôt : **79102262.7**

(22) Date de dépôt : **04.07.79**

(54) **Procédé et dispositif d'élaboration de silicium polycristallin.**

(30) Priorité : **11.07.78 FR 7820660**

(43) Date de publication de la demande : **23.01.80 (Bulletin 80/02)**

(45) Mention de la délivrance du brevet : **11.11.81 Bulletin 81/45**

(84) Etats contractants désignés : **BE CH DE FR GB IT NL SE**

(56) Documents cités :
**DE - B - 1 098 931**
**FR - A - 1 160 477**
**FR - A - 1 230 158**
**FR - A - 1 524 729**
**GB - A - 923 495**
**GB - A - 954 849**

(73) Titulaire : **COMPAGNIE GENERALE D'ELECTRICITE Société anonyme dite:**
**54, rue La Boétie**
**F-75382 Paris Cedex 08 (FR)**

(72) Inventeur : **Fally Jacques**
**4 Allée François Villon**
**F-91400 Orsay (FR)**

(74) Mandataire : **Weinmiller, Jürgen et al**
**Zeppelinstrasse 63**
**D-8000 München 80 (DE)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Imprimerie Jouve, 17, rue du Louvre, 75001 Paris, France

EP 0 007 063 B1

# Procédé et dispositif d'élaboration de silicium polycristallin

La présente invention concerne un procédé et un dispositif d'élaboration de silicium polycristallin et plus particulièrement un procédé et un dispositif d'élaboration de silicium polycristallin en vue de la réalisation de photopiles solaires.

On connaît un procédé d'élaboration de silicium polycristallin apte à la réalisation de photopiles solaires. Ce procédé consiste d'abord à purifier du silicium de qualité métallurgique. Pour cela, le silicium métallurgique est traité à l'acide chlorhydrique anhydre à la température de 250 °C environ pour former du trichlorosilane gazeux qui est successivement soumis à une distillation fractionnée et à une réduction par l'hydrogène à la température de 1 000 °C environ. Le procédé consiste ensuite à fondre dans un creuset le silicium de qualité électronique ainsi obtenu, puis à soumettre la masse de silicium fondue dans le creuset à un gradient de température vertical, la face supérieure de la masse fondue étant soumise à une température légèrement inférieure à la température du fusion du silicium, par exemple 1 400 °C, et la face inférieure étant en contact avec le creuset dont la température est maintenue à 1 200 °C au maximum.

Le procédé connu décrit ci-dessus présente l'inconvénient d'être très onéreux. En effet, la distillation fractionnée doit comporter un grand nombre de distillations successives et l'opération de réduction est également longue et délicate. De plus, le dispositif pour mettre en œuvre le procédé est très complexe et exige un investissement considérable.

Un autre procédé d'élaboration de silicium est décrit dans le document FR-A 12 30 158. Dans ce procédé connu, on part du silicium solide ou liquide et on obtient la purification du silicium par barbotage d'un gaz contenant du chlore et de l'oxygène. Le gaz qui s'échappe du récipient entraîne les impuretés.

L'invention a pour but un procédé simple permettant d'obtenir du silicium polycristallin à partir de matériaux de départ peu onéreux, de telle sorte que le matériau traité passe une seule fois de l'état liquide à l'état solide. Or, le silicium utilisé comme matériau de départ pour les procédés connus cités ci-dessus a déjà subi un procédé d'élaboration. Il est donc coûteux.

La présente invention a pour objet un procédé d'élaboration de silicium polycristallin consistant à purifier du silicium comportant des impuretés et à solidifier une masse liquide fondue du silicium purifié dans un récipient soumis à un gradient de température vertical, caractérisé en ce que,

— le silicium contenant des impuretés est obtenu par chauffage d'un mélange de carbone et de silice de manière à former un bain liquide de ce silicium après dégagement d'oxyde de carbone,

— la purification du silicium comportant des impuretés est effectuée en faisant barboter dans le bain liquide un gaz contenant du chlore et de l'oxygène,

— le gradient de température vertical est créé par un manchon de chauffage vertical entourant le récipient, les températures en haut et en bas du manchon étant respectivement supérieure et inférieure à la température de fusion du silicium,

— et que la solidification de la masse liquide de silicium purifié est obtenue par un déplacement vertical relatif du récipient et du manchon de façon à provoquer une cristallisation progressive affectant successivement les portions inférieures, médianes et supérieures de la masse liquide contenue dans le récipient.

La présente invention a aussi pour objet un dispositif pour mettre en œuvre le procédé ci-dessus, caractérisé en ce qu'il comporte à l'intérieur d'une enceinte,

— un premier creuset capable de recevoir ledit mélange de carbone et de silice, ce premier creuset étant muni de moyens de chauffage et de moyens de basculement autour d'un axe horizontal,

— un deuxième creuset capable de recevoir le bain liquide de silicium fondu comportant des impuretés par basculement du premier creuset, ce deuxième creuset comportant dans sa partie inférieure un orifice de vidange et des moyens d'obturation amovibles de cet orifice,

— une canalisation traversant la paroi de l'enceinte et débouchant à l'intérieur du deuxième creuset pour effectuer dans ledit bain le barbotage dudit gaz,

— des moyens de chauffage dudit deuxième creuset pour maintenir la température dudit bain au-dessus de la température de fusion du silicium,

— un récipient vertical disposé pour recevoir le bain liquide de silicium purifié s'écoulant dudit orifice lorsqu'il n'est pas obturé,

— un manchon de chauffage entourant ledit recipient et des moyens pour maintenir les températures en haut et en bas dudit manchon à des valeurs respectivement supérieure et inférieure à la température de fusion du silicium,

— des moyens de déplacement vertical du récipient suivant l'axe du manchon,

— et des moyens de pompage capables de faire sortir vers l'extérieur les gaz contenus dans l'enceinte.

L'invention sera décrite ci-dessous, à titre d'exemple, en référence au dessin annexé dans lequel la figure unique représente schématiquement un mode de réalisation du dispositif selon l'invention.

Sur la figure unique est représentée une enceinte cylindrique verticale 1 qui peut être réalisée en acier inoxydable. Les parois de l'enceinte 1 présentent des évidements dans lesquels on fait circuler un liquide organique caloporteur pour réchauffer l'enceinte. Cette enceinte est divisée en deux compartiments 2 et 3 séparés par une cloison médiane horizontale 4.

Dans le compartiment supérieur 2 est disposé

un creuset 5 qui est du type autocreuset. Il comporte alors une coquille métallique segmentée munie de moyens de refroidissement extérieurs (non représentés). Dans le creuset 5 est disposé une poudre 6 constituée par un mélange de carbone et de silice. Autour du creuset 5 est disposé un enroulement conducteur 7 qui est alimenté par un générateur de courant électrique à haute fréquence (non représenté). Ce creuset 5 comporte des moyens mécaniques capables de le faire basculer autour d'un axe horizontal 8 afin de déverser son contenu dans un autre creuset 9 disposé au-dessous du creuset 5 à l'intérieur de l'enceinte 1.

Le creuset 9 est constitué de quartz et est soutenu par un support 10 en graphite. Autour du creuset 9 est disposé un four vertical 11 comportant des résistances de chauffage 12 en graphite. Une canalisation 13 traverse la paroi cylindrique de l'enceinte 1 et vient déboucher dans la partie inférieure du volume interne du creuset 9. Le creuset 9 comporte dans sa partie inférieure un orifice de vidange 14 représenté obturé par un bouchon amovible 15 en silice relié à une tige de commande 16 traversant la paroi supérieure 17 de l'enceinte 1. Au-dessus du creuset 9 est disposé un tube incliné 18 par lequel on introduit dans ce creuset un matériau dopant 19 à l'aide d'un dispositif d'obturation amovible représenté par une flèche 48 ce dispositif étant commandable de l'extérieur de l'enceinte 1.

L'orifice 14 du creuset 9 débouche dans un tube vertical 20 en silice traversant un bloc 21 de matériau isolant qui constitue une partie de la cloison horizontale séparant les compartiments 2 et 3 de l'enceinte 1.

L'extrémité inférieure du tube 20 est située dans la partie supérieure du volume interne d'un récipient vertical 22 disposé dans le compartiment 3 de l'enceinte 1. La plus grande partie du récipient 22 est de section carrée mais sa partie inférieure comporte une section progressivement rétrécie de forme sensiblement pyramidale 23 qui se termine par un fond 24 en forme de cylindre de faible diamètre. Le récipient 22 réalisé de préférence en quartz, comporte un support en graphite 25 qui se prolonge par une tige en graphite 26 dont la partie inférieure est fixée à l'extrémité d'une tige métallique de commande 27 traversant la paroi inférieure 28 de l'enceinte 1 par l'intermédiaire d'un disque horizontal 29 fixé sur la tige 27 et relié à la paroi 28 par un soufflet 30. Des moyens d'entraînement mécanique 31 permettent de déplacer régulièrement et sans vibration, dans le sens vertical, la tige 27 suivant son axe.

Toujours à l'intérieur du compartiment 3 de l'enceinte sont disposés, autour du récipient 22 et de la tige 26, deux fours cylindriques verticaux superposés 32 et 33 comportant des résistances de chauffage en graphite, ces deux fours constituant un manchon de chauffage capable de créer un gradient de température vertical.

L'enceinte 1 comporte des hublots d'observation tel que le hublot 34 situé sur la paroi supérieure 17 de l'enceinte et les hublots latéraux 35, 36 et 37 qui peuvent également être utilisés pour mesurer, à l'aide de pyromètres optiques non représentés, la température des fours 11, 32 et 33.

L'enceinte 1 comporte aussi sur sa surface latérale des entrées de gaz 38 et 39 munies chacune d'une vanne d'arrêt, permettant d'introduire un gaz neutre respectivement dans les compartiments 2 et 3 de l'enceinte 1.

Une pompe 40 capable de produire un vide de $10^{-3}$ torr environ est reliée au compartiment 2 de l'enceinte 1 par l'intermédiaire d'un condenseur 41. La pompe 40 permet d'aspirer les vapeurs contenues dans le compartiment 2, d'en condenser une partie et de rejeter l'autre partie dans l'atmosphère environnante à travers un épurateur 42.

Un réservoir de condensation 43 est relié par une canalisation 44 à une ouverture 45 de la cloison horizontale 4. La sortie du condenseur 41 peut être, comme représenté, être reliée au réservoir 43.

Une autre pompe à vide 46 peut être reliée au compartiment 3 de l'enceinte 1.

Le dispositif représenté sur la figure permet de mettre en œuvre le procédé d'élaboration de silicium polycristallin selon l'invention.

Le matériau de départ est constitué par de la silice sous forme de quartzite contenant à titre indicatif 800 p.p.m d'impuretés, ces impuretés comprenant principalement de l'aluminium et du fer.

Après broyage, ce matériau est mélangé avec une poudre de carbone obtenue par pyrolyse d'un hydrocarbure gazeux et contenant, à titre indicatif, 15 à 30 p.p.m d'impuretés. Le mélange est effectué dans les proportions stœchiométriques de la réaction

$$SiO_2 + 2C \rightarrow Si + 2CO \quad (1)$$

Le mélange est séché dans un séchoir atomiseur de façon à obtenir des granulés secs de dimensions comprises entre 0,1 et 1 millimètre.

Ce mélange sec est introduit dans l'autocreuset 5 qui est chauffé en faisant passer un courant électrique haute fréquence dans l'enroulement 7. Le passage du courant induit dans la poudre peut être amorcé en ajoutant à cette poudre des morceaux de graphite. Il en résulte la réduction selon la réaction 1, puis la fusion du silicium dans une zone centrale 47 du volume interne de l'autocreuset ; une couche 6 de poudre non fondue, en contact avec la paroi interne du creuset 5, subsiste pendant la fusion grâce au refroidissement de l'autocreuset. La température est portée à 1 800 °C environ. Les vapeurs d'oxyde de carbone qui se dégagent de la zone fondue 47 au cours de la réaction sont aspirées par la pompe 40. Pendant ce temps il est possible d'injecter dans l'enceinte par l'entrée 38 du compartiment 2 un gaz neutre tel que l'argon.

Lorsque la réaction est terminée, on obtient un bain fondu de silicium comportant des impuretés,

qui est coulé dans le creuset 9 en actionnant le système de basculement du creuset 5, l'ouverture 14 du creuset 9 étant obturée par le bouchon 15.

La température du bain liquide contenu dans le creuset 9 est maintenue par le four 11 à une température supérieure à la température de fusion du silicium par exemple à 1 600 °C.

On injecte alors dans la canalisation 13 un mélange gazeux de chlore et d'oxygène de manière à faire barboter ce mélange gazeux dans le bain liquide de silicium fondu. Au cours du barbotage, les impuretés contenues dans le bain, telles que l'aluminium et le fer passent à l'état de chlorures volatils qui sont aspirés par la pompe 40. Une partie de ces vapeurs est condensée dans le condenseur 41 et se dépose dans le réservoir 43. Une autre partie de ces vapeurs se condense sur les parois internes du compartiment 2 et le liquide de condensation s'écoule par l'ouverture 45 dans le réservoir 43. La circulation, dans les évidements ménagés dans la paroi de l'enceinte, d'un liquide caloporteur à la température de 200 °C environ permet de diminuer la condensation des vapeurs de chlorures sur la paroi interne de l'enceinte. Enfin la partie de ces vapeurs qui ne peut être condensée est rejetée dans l'atmosphère après passage dans l'épurateur 42.

On obtient ainsi dans le creuset 9 un bain liquide de silicium purifié. On introduit dans ce bain par le tube 18 une masse prédéterminée 19 d'un alliage-mère de silicium et d'un produit dopant tel que le bore. Cet alliage fond dans le bain de manière à doper la masse de silicium fondue.

Le bain liquide de silicium purifié et dopé est coulé ensuite dans le récipient 22 à travers le tube 20 en soulevant la tige 16 solidaire du bouchon 15.

Tel que représenté sur la figure, le récipient 22 est entouré par le four vertical 32 dont la température interne est maintenue à 1 600 °C environ, c'est-à-dire à une température supérieure à la température de fusion du silicium.

Ce récipient 22 est déplacé verticalement vers le bas, de manière que le fond 24 du récipient 22 entre progressivement dans le volume chauffé par le four inférieur 33 dont la température interne est maintenue à 1 400 °C environ, c'est-à-dire à une température inférieure à la température de fusion du silicium. Ce déplacement vertical est poursuivi jusqu'à ce que le récipient 22 soit entouré sur la totalité de sa hauteur par le four inférieur 33. On réalise ainsi une cristallisation progressive affectant successivement les portions inférieures, médianes et supérieures de la masse liquide de silicium contenue dans le récipient 22. Au cours du déplacement progressif du récipient 22, il est possible d'injecter dans le compartiment 3 de l'enceinte 1 un gaz neutre tel que l'argon qui, après circulation dans le compartiment est rejeté dans l'atmosphère par la pompe 46.

Il est à noter que la cristallisation progressive réalisée par le déplacement vertical du récipient vers le bas entraîne une purification supplémentaire du silicium, qui s'ajoute à celle provoquée par le barbotage du gaz formé de chlore et d'oxygène dans le bain liquide. En effet les impuretés qui pourraient subsister sont déplacées progressivement vers la partie supérieure du lingot au fur et à mesure du déplacement.

Le récipient 22 contenant la masse cristallisée est maintenu à l'intérieur du four 33 un temps suffisant pour effectuer un recuit de cette masse à une température légèrement inférieure à la température de fusion du silicium. Ce recuit permet de réduire les tensions mécaniques induites par la cristallisation et d'homogénéiser par diffusion le dopant dans la masse de silicium. Puis le four 33 est refroidi progressivement à la température ambiante.

Le lingot de silicium ainsi obtenu est très pur, à l'exception de la croûte supérieure qui de préférence n'est pas utilisée ainsi que l'extrémité inférieure dont la section est trop faible. Le lingot possède une structure polycristalline qui le rend apte à la réalisation de photopiles solaires au silicium. Il est à remarquer que le bloc polycristallin de silicium obtenu peut contenir des volumes relativement importants de silicium monocristallin.

Comme il est bien connu, le lingot peut être découpé à l'aide d'une scie à lames multiples de manière à obtenir des tranches très minces qui sont utilisées dans la réalisation de photopiles solaires ou de composants semi-conducteurs en général.

Le procédé décrit ci-dessus présente l'avantage d'être économique. En effet les opérations de formation du silicium, de purification et de cristallisation sont réalisées de telle sorte que le matériau traité passe une seule fois de l'état liquide à l'état solide. On économise ainsi une quantité très importante d'énergie par rapport au procédé selon l'art antérieur cité plus haut, dans lequel notamment les multiples distillations successives dissipent une quantité considérable d'énergie. Du fait du faible nombre d'opérations, les pertes de matériau sont faibles, contrairement à ce qui a lieu dans le procédé selon l'art antérieur. De plus, le dispositif mettant en œuvre le procédé évite toute manutention ou transport de matériaux et peut être facilement automatisé. Enfin la dépense d'investissement est réduite par rapport à celle du dispositif selon l'art antérieur et la capacité de production du dispositif selon l'invention peut atteindre à titre indicatif 50 kg de silicium polycristallin par cycle de 3 heures.

**Revendications**

1. Procédé d'élaboration de silicium polycristallin consistant à purifier du silicium comportant des impuretés et à solidifier une masse liquide fondue du silicium purifié dans un récipient soumis à un gradient de température vertical, caractérisé en ce que,

— le silicium contenant des impuretés est obtenu par chauffage d'un mélange de carbone et de silice de manière à former un bain liquide de ce silicium après dégagement d'oxyde de carbone,

— la purification du silicium comportant des impuretés est effectuée en faisant barboter dans le bain liquide un gaz contenant du chlore et de l'oxygène,

— le gradient de température vertical est créé par un manchon de chauffage vertical entourant le récipient, les températures en haut et en bas du manchon étant respectivement supérieure et inférieure à la température de fusion du silicium,

— et la solidification de la masse liquide de silicium purifié est obtenue par un déplacement vertical relatif du récipient et du manchon de façon à provoquer une cristallisation progressive affectant successivement les portions inférieures, médianes et supérieures de la masse liquide contenue dans le récipient.

2. Procédé selon la revendication 1, caractérisé en ce qu'on introduit un matériau dopant dans la masse liquide de silicium purifié.

3. Procédé selon la revendication 2, caractérisé en ce que le matériau dopant est un alliage formé de silicium et d'un produit dopant.

4. Procédé selon la revendication 1, caractérisé en ce qu'il consiste en outre à faire subir à la masse solidifiée un recuit à une température légèrement inférieure à la température de fusion du silicium.

5. Procédé selon la revendication 1, caractérisé en ce que la purification et la solidification sont réalisées sous vide.

6. Procédé selon la revendication 1, caractérisé en ce que la purification est effectuée sous atmosphère neutre.

7. Dispositif pour mettre en œuvre le procédé selon la revendication 1, caractérisé en ce qu'il comporte, à l'intérieur d'une enceinte (1),

— un premier creuset (5) capable de recevoir ledit mélange de carbone et de silice, ce premier creuset étant muni de moyens de chauffage (7) et de moyens de basculement autour d'un axe horizontal (8),

— un deuxième creuset (9) capable de recevoir le bain liquide de silicium fondu comportant des impuretés par basculement du premier creuset, ce deuxième creuset comportant dans sa partie inférieure un orifice de vidange (14) et des moyens d'obturation (15) amovibles de cet orifice,

— une canalisation (13) traversant la paroi de l'enceinte et débouchant à l'intérieur du deuxième creuset, cette canalisation étant reliée à une source de gaz de barbotage,

— des moyens de chauffage (11) dudit deuxième creuset pour maintenir la température dudit bain au-dessus de la température de fusion du silicium,

— un récipient vertical (22) disposé pour recevoir le bain liquide de silicium purifié s'écoulant dudit orifice lorsqu'il n'est pas obturé,

— un manchon de chauffage (32, 33) entourant ledit recipient et des moyens pour maintenir les températures en haut et en bas dudit manchon à des valeurs respectivement supérieure et inférieure à la température de fusion du silicium,

— des moyens de déplacement (26, 27, 31) vertical du récipient suivant l'axe du manchon,

— et des moyens de pompage (40, 46) capables de faire sortir vers l'extérieur les gaz contenus dans l'enceinte.

8. Dispositif selon la revendication 7, caractérisé en ce que le récipient comporte une partie inférieure (23, 24) à section rétrécie.

9. Dispositif selon la revendication 7, caractérisé en ce que le manchon de chauffage est constitué de deux fours cylindriques verticaux superposés.

10. Dispositif selon la revendication 7, caractérisé en ce que lesdits moyens de pompage comportent une pompe à vide (40) et qu'il comporte en outre un condenseur (41) disposé dans le circuit de pompage entre l'enceinte et la pompe à vide.

11. Dispositif selon la revendication 7, caractérisé en ce qu'il comporte en outre des moyens (38, 39) pour faire circuler un gaz neutre dans ladite enceinte.

12. Dispositif selon la revendication 7, caractérisé en ce qu'il comporte un réservoir de condensation (43) pour recueillir les produits de la condensation, sur la paroi interne de ladite enceinte, des vapeurs s'échappant dudit bain liquide pendant la purification.

13. Dispositif selon la revendication 7, caractérisé en ce qu'il comporte des moyens pour faire circuler un fluide caloporteur à l'intérieur des parois de l'enceinte.

14. Dispositif selon la revendication 7, caractérisé en ce que le premier creuset est du type autocreuset et que ses moyens de chauffage comportent un enroulement électrique d'induction.

15. Dispositif selon la revendication 7, caractérisé en ce qu'il comporte en outre des moyens (18) pour introduire un matériau dopant (19) dans la masse liquide de silicium purifié contenue dans le deuxième creuset.

**Claims**

1. Method for producing polycristalline silicon consisting in purifying a silicon which contains impurities and in solidifying a liquid molten mass of purified silicon in a chamber submitted to a vertical temperature gradient, characterized in that

— the silicon which contains impurities is obtained by heating a mixture of carbon and silica in order to form a liquid bath of said silicon after the escape of carbon oxide,

— the purification of said silicon which contains impurities is effected by bubbling of a chlorine and oxygen containing gas in the liquid bath,

— the vertical temperature gradient is created

by a vertical heating sleeve surrounding said chamber, the temperatures in the upper and lower part of the sleeve being respectively higher and lower than the melting temperature of the silicon,

— and the solidification of the liquid mass of purified silicon is obtained by a relative vertical displacement of the chamber and the sleeve in order to provoque a progressive cristallisation affecting successively the lower, middle and upper portions of the liquid mass contained in the chamber.

2. Method according to claim 1, characterized in that a doping material is introduced into the liquid mass of purified silicon.

3. Method according to claim 2, characterized in that the doping material is an alloy formed of silicon and a doping product.

4. Method according to claim 1, characterized in that it consists moreover in reheating the solidified mass up to a temperature slightly lower than the melting temperature of the silicon.

5. Method according to claim 1, characterized in that the purification and the solidification are realized under vacuum.

6. Method according to claim 1, characterized in that the purification is effected under neutral atmosphere.

7. Device for the execution of the method according to claim 1, characterized in that it comprises within a chamber (1),

— a first crucible (5) capable of receiving said mixture of carbon and silica, said first crucible being provided with heating means (7), and with means for tilting it around a horizontal axis (8),

— a second crucible (9) capable of receiving the liquid bath of molten silicon containing impurities upon tilting of the first crucible, said second crucible comprising in its lower part a drainage orifice (14) and blocking means (15) which can be removed from this orifice,

— a pipe (13) passing through the wall of the chamber and leading to the inside of the second crucible, this pipe being connected with a source of bubble gas,

— heating means (11) of said second crucible for maintaining the temperature of said bath above the melting temperature of the silicon,

— a vertical receptacle (22) disposed in order to receive the liquid bath of purified silicon flowing from said orifice when it is not blocked,

— a heating sleeve (32, 33) surrounding said receptacle and means for maintaining the temperatures in the upper and lower part of said sleeve at values respectively higher and lower than the melting temperature of the silicon,

— means (25, 27, 31) for vertically displacing the receptacle along the axis of the sleeve,

— and pumping means (40, 46) capable of removing to the outside the gases contained in the chamber.

8. Device according to claim 7, characterized in that the chamber comprises a lower part (23, 24) having a tapering cross-section.

9. Device according to claim 7, characterized in that the heating sleeve is constituted of two vertically superposed cylindrical ovens.

10. Device according to claim 7, characterized in that said pumping means comprise a vacuum pump (40) and that it further comprises a condenser (41) disposed in the pumping circuit between the chamber and the vacuum pump.

11. Device according to claim 7, characterized in that it further comprises means (38, 39) for circulating a neutral gas in said chamber.

12. Device according to claim 7, characterized in that it comprises a condensation tank (43) for collecting the products of condensation on the inner wall of said chamber from vapours escaping from said liquid bath during purification.

13. Device according to claim 7, characterized in that it comprises means for circulating a heating fluid within the walls of the chamber.

14. Device according to claim 7, characterized in that the first crucible is of the self-crucible type and that its heating means comprise an electric induction winding.

15. Device according to claim 7, characterized in that it further comprises means (18) for introducing a doping material (19) into the masse of purified liquid silicon contained in said second crucible.

**Ansprüche**

1. Verfahren zur Herstellung von polykristallinem Silizium, das darin besteht, ein Verunreinigungen aufweisendes Silizium zu reinigen und eine flüssige geschmolzene Masse des gereinigten Siliziums in einem Behälter zu verfestigen, der einem vertikalen Temperaturgradienten unterworfen wird, dadurch gekennzeichnet, daß

— das Verunreinigungen aufweisende Silizium durch Erhitzen einer Mischung von Kohlenstoff und Siliziumdioxyd erhalten wird, so daß nach dem Entweichen von Kohlenstoffoxyd ein flüssiges Siliziumbad erhalten wird,

— die Reinigung des Verunreinigungen aufweisenden Siliziums dadurch erfolgt, daß das flüssige Bad mit einem Chlor und Sauerstoff enthaltenden Gas durchperlt wird,

— der senkrechte Temperaturgradient durch eine senkrechte Heizmuffe, die den Behälter umgibt, erhalten wird, wobei die Temperaturen am oberen und unteren Teil der Muffe höher bzw. niedriger als die Schmelztemperatur des Siliziums sind,

— und die Verfestigung der flüssigen Masse des gereinigten Siliziums durch eine relative senkrechte Verschiebung des Behälters und der Muffe erhalten wird, wodurch eine fortschreitende Kristallisierung hervorgerufen wird, die nacheinander die unteren, mittleren und oberen Partien der im Behälter enthaltenen flüssigen Masse beeinflußt.

2. Verfahren nach Anspruch 1, dadurch gekennzeichnet, daß man der flüssigen Masse gereinigten Siliziums ein Dopiermaterial zufügt.

3. Verfahren nach Anspruch 2, dadurch gekennzeichnet, daß das Dopiermaterial eine Legierung aus Silizium und einem Dopierprodukt ist.

4. Verfahren nach Anspruch 1, dadurch gekennzeichnet, daß es außerdem darin besteht, die verfestigte Masse einer Wiedererwärmung bei einer Temperatur zu unterziehen, die leicht unter der Schmelztemperatur des Siliziums liegt.

5. Verfahren nach Anspruch 1, dadurch gekennzeichnet, daß die Reinigung und die Verfestigung unter Vakuum durchgeführt werden.

6. Verfahren nach Anspruch 1, dadurch gekennzeichnet, daß die Reinigung in einer neutralen Atmosphäre erfolgt.

7. Vorrichtung zur Durchführung des Verfahrens nach Anspruch 1, dadurch gekennzeichnet, daß sie im Inneren eines Behälters (1) aufweist :

— einen ersten Schmelztiegel (5), der die Mischung aus Kohlenstoff und Siliziumdioxyd aufnehmen kann, wobei dieser erste Schmelztiegel mit Heizmitteln (7) und Mitteln zum Kippen um eine horizontale Achse (8) versehen ist,

— einen zweiten Schmelztiegel (9), der durch Kippen des ersten Schmelztiegels das flüssige Bad geschmolzenen Siliziums mit Verunreinigungen zugeführt erhält, und in seinem unteren Teil eine Entleerungsöffnung (14) und von dieser Öffnung entfernbare Verschlußmittel (15) aufweist,

— eine Kanalisation (13), die die Wand des Behälters durchquert und im Innern des zweiten Schmelztiegels mündet, wobei diese Kanalisation mit einer Quelle von Perlgas verbunden ist,

— Heizmittel (11) des zweiten Schmelztiegels, um die Temperatur des Bads über der Schmelztemperatur des Siliziums zu halten,

— einen vertikalen Auffangbehälter (22) für das flüssige Bad gereinigten Siliziums, das aus der Öffnung fließt, wenn sie nicht verschlossen ist,

— eine Heizmuffe (32, 33), die den Behälter umgibt, und Mittel zur Aufrechterhaltung der Temperaturen am oberen und unteren Ende der Muffe auf Werten, die höher bzw. niedriger als die Schmelztemperatur des Siliziums sind,

— Mittel (26, 27, 31) zur senkrechten Verschiebung des Auffangbehälters entlang der Achse der Muffe,

— und Pumpmittel (40, 46), die die im Behälter enthaltenen Gase nach außen abpumpen können.

8. Vorrichtung nach Anspruch 7, dadurch gekennzeichnet, daß der Auffangbehälter einen unteren Teil (23, 24) mit verringertem Querschnitt aufweist.

9. Vorrichtung nach Anspruch 7, dadurch gekennzeichnet, daß die Heizmuffe aus zwei übereinandergestapelten zylindrischen Öfen besteht.

10. Vorrichtung nach Anspruch 7, dadurch gekennzeichnet, daß die Pumpmittel eine Vakuumpumpe (40) und außerdem einen Kondensator (41) aufweisen, der im Pumpkreis zwischen dem Behälter und der Vakuumpumpe angeordnet ist.

11. Vorrichtung nach Anspruch 7, dadurch gekennzeichnet, daß sie außerdem Mittel (38, 39) aufweist, um ein neutrales Gas im Behälter zirkulieren zu lassen.

12. Vorrichtung nach Anspruch 7, dadurch gekennzeichnet, daß sie ein Kondensationsreservoir (43) aufweist, um die Kondensationsprodukte an der Behälter-Innenwand aufzufangen, die während der Reinigung aus dem flüssigen Bad entweichen.

13. Vorrichtung nach Anspruch 7, dadurch gekennzeichnet, daß sie Mittel aufweist, um ein Heizfluid im Innern der Wände des Behälters zirkulieren zu lassen.

14. Vorrichtung nach Anspruch 7, dadurch gekennzeichnet, daß der erste Schmelztiegel ein « Auto-Schmelztiegel » ist und daß seine Heizmittel eine elektrische Induktionswicklung aufweisen.

15. Vorrichtung nach Anspruch 7, dadurch gekennzeichnet, daß sie außerdem Mittel (18) aufweist, um ein Dopiermaterial (19) in die flüssige Masse gereinigten Siliziums im zweiten Schmelztiegel einzuführen.

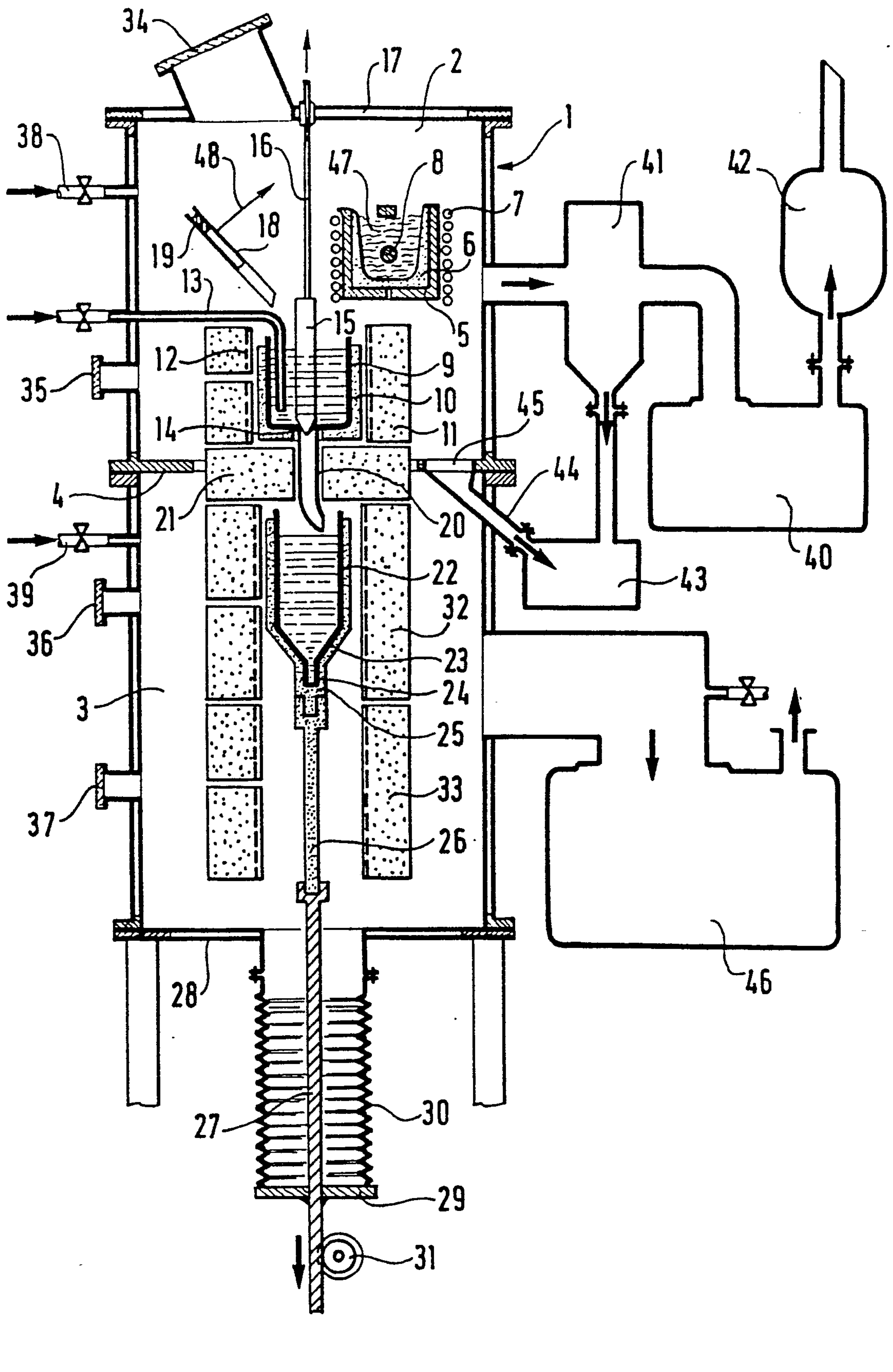
34
17
2
1
38
48
16
47
8
7
41
42
19
18
6
13
5
15
12
9
35
10
45
14
11
44
4
21
20
39
22
43
40
32
36
23
24
3
25
33
37
26
46
28
27
30
29
31